# EUROPEAN PATENT SPECIFICATION

(11) **EP 2 574 777 B1**
(45) Date of publication and mention of the grant of the patent: **18.03.2020**
(21) Application number: 11183279.6
(22) Date of filing: 29.09.2011
(51) Int. Cl.: G01M 13/02

(54) **A test rig and a method for testing gearboxes having different gear ratios**
Prüfstand und Verfahren zum Prüfen von Getrieben mit unterschiedlichen Gangverhältnissen
Banc d'essai et procédé de test de boîtes de vitesses dotées de différents rapports de transmission

(43) Date of publication of application: 03.04.2013
(73) Proprietor: Moventas Gears Oy, 40101 Jyväskylä (FI)
(72) Inventor: Villgren, Voitto, 40630 Jyväskylä (FI); Toikkanen, Jari, 40950 Muurame (FI)
(74) Representative: Finnpatent Oy

(56) References cited:
- DE-C- 854 274
- JP-A- 60 018 739
- JP-A- S63 236 940
- JP-U- S5 854 542
- Athanassios Mihailidis ET AL: "A New System for Testing Gears Under Variable Torque and Speed", , 1 November 2009 (2009-11-01), pages 179-192, XP55018826, DOI: 10.2174/1874477X10902030179 Retrieved from the Internet: URL:http://www.benthamscience.com/meng/sam ples/meng2-3.tar/0002MENG.pdf [retrieved on 2012-02-08]

## Description

### Field of the invention

The invention relates to a test rig for testing gearboxes and to a method for testing a gearbox. More particularly, the invention relates to providing a test rig that is suitable for different gearboxes having different gear ratios and that is capable of imposing controllable testing torque to a gearbox under test.

### Background

The requirements set to modern gearboxes are many times challenging to meet. The gearboxes should be efficient, strong, sufficiently small, quiet, and easy to manufacture. Furthermore, the gearboxes should be cost effective. Despite the progress made in the last years regarding the analysis and simulation, experiments are still essential. There are many modes of failure that may appear when the load carrying capacity of a gearbox is exceeded. Tooth breakage, pittings and micro-pittings as well as excessive wear or even scuffing are the potential problems. Besides the load carrying capacity, there are also other important parameters like efficiency and dynamic behavior that need to be experimentally investigated. Therefore, test rigs that allow gearboxes to operate under predefined speed and torque conditions are needed.

A straightforward way to design such a test rig is to place a gearbox under test between a motor and a brake. This arrangement has, however, many disadvantages. Firstly, the motor has to be dimensioned to supply all the power under which the gearbox has to be tested. Secondly, the brake has to be dimensioned to be capable of receiving all the power. High installation costs and high energy consumption are the result. A more advantageous way to test gearboxes is to include the gearbox under test in a closed power loop, which can be either electrical or mechanical. In the first case, an electric motor drives the input shaft of the gearbox under test and the output shaft of the gearbox is coupled to a generator that feeds the power back to an electrical network. In this way, the total energy consumption is significantly reduced. However, there is a drawback of the big size of both of the motor and generator because they have to be dimensioned according to the maximum test power. In the second case, the test rig comprises a gear system connectable to the input and output shafts of the gearbox under test and a power transmission shaft such that mechanical power is capable of flowing in a mechanical closed power loop constituted by the gear system, the gearbox under test, and the power transmission shaft. A drive motor is used to rotate the system. The test rig based on the mechanical closed power loop provides significant advantages. Installation cost is significantly reduced, since no generator or brake is needed, and the drive motor has to be rated according only to the mechanical power loss taking place in the mechanical closed power loop. Challenges of the test rigs based on the mechanical closed power loop are related, among others, to achieving desired and controllable test torque and to a need to test different gearboxes having different gear ratios.

Publication US3112643 discloses test rig that comprises a planetary gear on the mechanical closed power loop. Test torque is imposed to the gearbox under test by applying a tangential force to the planet-wheel carrier of the planetary gear. The tangential force is generated during the test with an auxiliary worm gearing connected to the outer periphery of the planet-wheel carrier. The auxiliary worm gearing can be controlled, for example, either manually or using a numerically controlled stepper motor. The test rig disclosed in US3112643 provides a possibility to impose desired and controllable test torque to the gear box under test. The test torque can be varied during the test by controlling the auxiliary worm gearing. The drawback of the test rig is that the test rig is suitable for testing only such gearboxes which have a certain gear ratio, i.e. it is not possible to test different gearboxes having arbitrary gear ratios. A test rig of the kind described above is also disclosed by Athanassios Mihailidis et al: "A New System for Testing Gears Under Variable Torque and Speed", Recent Patents of Mechanical Engineering 2009, 2, 179-192, Bentham Science Publishers Ltd. The publication of Athanassios Mihailidis et al. refers to the above-mentioned publication US3112643.

Publication JP60018739 describes a method and system for controlling a torque load by directing the torque load to a device under test by a servomotor through a planetary gear mechanism.

Publication JPS63236940 describes a test system that comprises a gear device to be tested, power circulation gear devices, and a torque loading gear device having first shafts connected to the power circulation gear devices and a second shaft connected to a torque load motor. The torque load motor rotates matching with a difference in rotating speed at the first shafts of the torque loading gear device and supplies torque to the test system.

Publication DE854274 describes a test system where a gear device under test is arranged within a mechanical power loop that comprises a torque loading gear device having first shafts belonging to the mechanical power loop and a second shaft connected to a torque load motor. The torque load motor rotates matching with a difference in rotating speed at the first shafts of the torque loading gear device and supplies torque to the test system.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the first aspect of the present invention, there is provided a new test rig for testing a gearbox. The test rig according to the invention comprises:
- a gear system comprising rotatable connection interfaces suitable for being connected to input and output shafts of the gearbox under test,
- a power transmission shaft such that mechanical power is capable of flowing in a mechanical closed power loop constituted by the gear system, the gearbox under test, and the power transmission shaft, and
- a drive motor for driving the mechanical closed power loop,
wherein the gear system comprises a differential gear stage having first and second rotatable elements which form part of the mechanical closed power loop and whose mutual rotational speed difference depends on rotational speed of a third rotatable element of the differential gear stage, and wherein the test rig is adapted to the gear ratio of the gearbox under test by allowing the third rotatable element of the differential gear stage to rotate at such a speed that a speed difference of the first and second rotatable elements of the differential gear stage compensates for an effect of gear ratios of other elements, including the gearbox under test, in the mechanical closed power loop, and the test rig further comprises a controlling device connected to the third rotatable element of the differential gear stage and arranged to control torque acting on the third rotatable element when the third rotatable element is rotating. The differential gear stage is a planetary gear, wherein a sun gear shaft and a gear ring of the planetary gear are the first and second rotatable elements so that the gear ring has gear teeth also on its outer periphery, and a planet-wheel carrier of the planetary gear is the third rotatable element.

The above-described test rig is adapted to different gear ratios of different gearboxes to be tested by allowing the third rotatable element of the differential gear stage to rotate at such a speed that the speed difference of the first and second rotatable elements of the differential gear stage compensates the effect of the gear ratios of the other elements, including the gearbox under test, in the mechanical closed power loop. Hence, the necessary condition that the product of all gear ratios is unity in the mechanical closed power loop is fulfilled with the aid the differential gear stage. The torque imposed to the gearbox under test can be varied during the test and the torque can be controlled by controlling the torque acting on the third rotatable element of the differential gear stage.

In accordance with the second aspect of the present invention, there is provided a new method for testing a gearbox. The method according to the invention comprises:
- connecting input and output shafts of the gearbox under test to rotatable connection interfaces of a gear test rig, the gear test rig constituting together with the gearbox under test a mechanical closed power loop,
- driving the mechanical closed power loop so as to supply mechanical power losses to the mechanical closed power loop,
- adapting the gear ratio of the gear test rig to correspond to the gear ratio of the gearbox under test with the aid of a differential gear stage having first and second rotatable elements which form part of the mechanical closed power loop and whose mutual rotational speed difference depends on rotational speed of a third rotatable element of the differential gear stage, and
- imposing test torque to the gearbox under test by controlling torque acting on the third rotatable element when the third rotatable element is rotating,
wherein the differential gear stage is a planetary gear, a sun gear shaft and a gear ring of the planetary gear being the first and second rotatable elements so that the gear ring has gear teeth also on its outer periphery, and a planet-wheel carrier of the planetary gear being the third rotatable element.

A number of exemplifying embodiments of the invention are described in accompanied dependent claims.

Various exemplifying embodiments of the invention both as to constructions and to methods of operation, together with additional objects and advantages thereof, will be best understood from the following description of specific exemplifying embodiments when read in connection with the accompanying drawings.

The verb "to comprise" is used in this document as an open limitation that neither excludes nor requires the existence of unrecited features. The features recited in depending claims are mutually freely combinable unless otherwise explicitly stated.

### Brief description of the figures

The exemplifying embodiments of the invention and their advantages are explained in greater detail below in the sense of examples and with reference to the accompanying drawings, in which:
figure 1 illustrates the principle of a test rig according to an embodiment of the invention for testing a gearbox,
figure 2 shows a schematic illustration of a test rig according to an embodiment of the invention for testing a gearbox, and
figure 3 shows a flow chart of a method according to an embodiment of the invention for testing a gearbox.

### Description of the embodiments

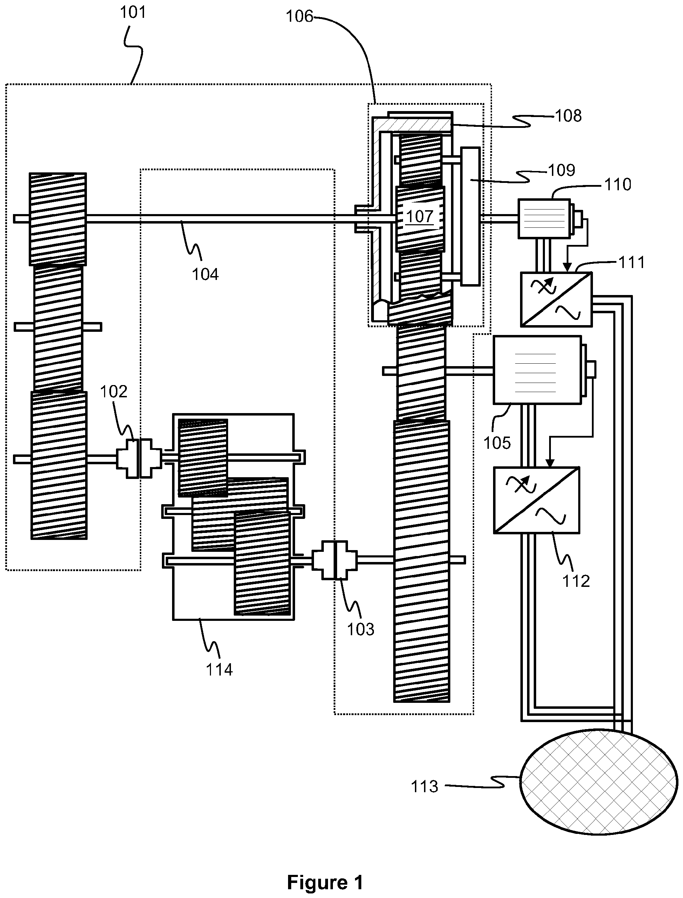

Figure 1 illustrates the principle of a test rig according to an embodiment of the invention for testing a gearbox 114. The test rig comprises a gear system 101 and a power transmission shaft 104. The gear system comprises rotatable connection interfaces 102 and 103, e.g. flanges, suitable for being connected to input and output shafts of the gearbox 114 under test. The gear system 101 and the power transmission shaft 104 constitute together with the gearbox 114 under test a mechanical closed power loop as illustrated in figure 1. The test rig comprises also a drive motor 105 arranged to drive the mechanical closed power loop. In steady state, the drive motor 105 has to supply only the power loss of the mechanical closed power loop and thus the power rating of the drive motor 105 can be significantly lower than the maximum testing power of the gearbox 114 under test. The gear system 101 comprises a differential gear stage 106 having first and second rotatable elements 107 and 108 which form part of the mechanical closed power loop and whose mutual gear ratio depends on rotational speed of a third rotatable element 109 of the differential gear stage. The test rig is adapted to the gear ratio of the gearbox 114 under test by allowing the third rotatable element 109 of the differential gear stage to rotate at such a speed that the speed difference of the first and second rotatable elements 107 and 108 of the differential gear stage compensates the effect of the gear ratios of the other elements, including the gearbox under test, in the mechanical closed power loop. In the exemplifying case shown on figure 1, the differential gear stage is a planetary gear. The first and second rotatable elements 107 and 108 are the sun gear shaft of the planetary gear and the gear ring of the planetary gear, respectively. In the exemplifying construction shown in figure 1, the gear ring has gear teeth also on its outer periphery. The third rotatable element 109 of the differential gear stage 106 is the planet-wheel carrier of the planetary gear. As mentioned earlier in this document, it should be noted that a planetary gear is not the only possible alternative for the differential gear stage.

The test rig further comprises a controlling device connected to the third rotatable element 109 of the differential gear stage and arranged to control torque acting on the third rotatable element when the third rotatable element is rotating. By controlling the torque acting on the third rotatable element 109 it is possible to control the test torque imposed to the gearbox 114 under test. In the exemplifying case shown in figure 1, the controlling device comprises an electrical machine 110 and an electrical converter device 111. The electrical converter is arranged to control the electrical machine 110 on the basis of a difference between the torque of the electrical machine and a reference torque. In a test rig according to an exemplifying embodiment of the invention, the electrical converter device 111 is arranged to change the reference torque in response to a situation in which the rotational speed of the electrical machine 110 meets an upper speed limit or a lower speed limit. The reference torque is changed in the direction that the rotational speed is returned to a speed window defined with the upper and lower speed limits.

The electrical machine 110 can be an alternating current "AC" electrical machine and the electrical converter device 111 can be a frequency converter that is connected to a three-phase power supply network 113. An AC-electrical machine can be, for example, an induction machine or a permanent magnet synchronous machine. In order to achieve good control accuracy, the frequency converter can be arranged use vector control that is based on controlling not only frequency and amplitudes of voltages and currents but also instantaneous phases of the voltages and currents. Especially, if a tachometer is used, very good control accuracy is achievable. The electrical machine could as well be a direct current "DC" electrical machine and the converter device could be an AC-to-DC converter, e.g. a thyristor converter. In some applications, the controlling device connected to the third rotatable element 109 of the differential gear stage could be a simple brake but an inherent drawback of a brake is that it can produce only torque that is acting against a direction of rotation. An electrical machine can produce torque in both directions depending on whether the electrical machine operates as a motor or as a generator.

In a test rig according to an embodiment of the invention, the drive motor 105 that is arranged to drive the mechanical closed power loop is an electrical motor that is supplied and controlled with an electrical converter device 112 arranged to control rotational speed of the electrical motor on the basis of a difference between the rotational speed of the electrical motor and a reference speed. In the exemplifying case shown in figure 1, the drive motor 105 is an alternating current electrical motor and the electrical converter device 112 is a frequency converter. In order to achieve good speed control accuracy, the converter device 112 can be arranged use the vector control. Especially, if a tachometer is used, it is possible to achieve very good speed control accuracy. It is also possible that the electrical motor is an AC-electrical motor that is directly connected to the power supply network 113. In this case, the rotational speed of the motor 105 is determined by the frequency of the supply network but there can be significant fluctuations in the rotational speed when there are dynamical changes in instantaneous loading conditions.

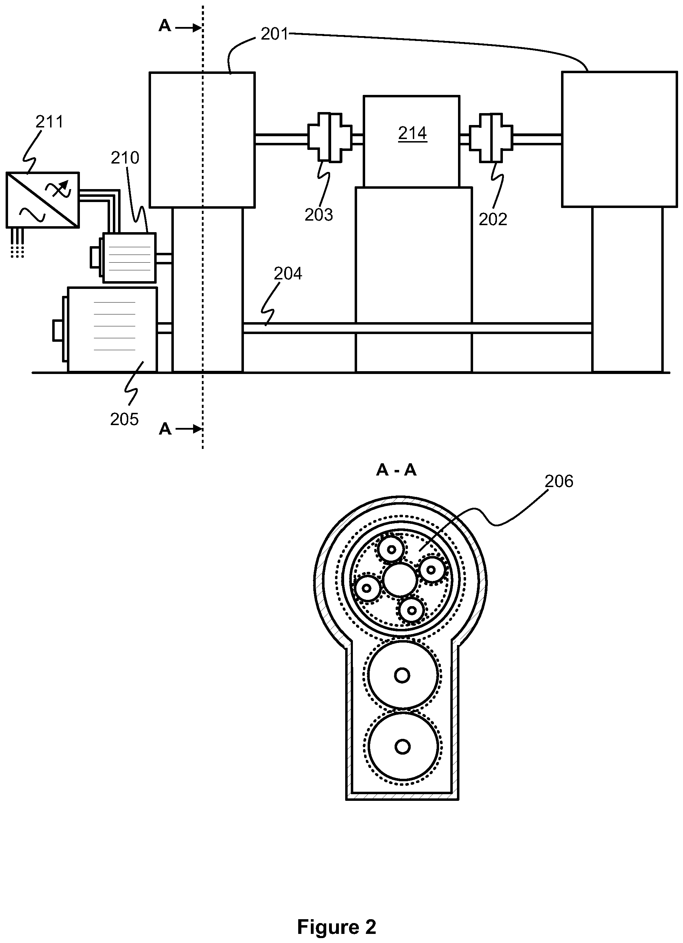

Figure 2 shows a schematic illustration of a test rig according to an embodiment of the invention for testing a gearbox 214. The upper part of figure 2 shows a side view of the test rig where the gearbox 214 is in the testing position. The lower part of figure 2 shows the section taken along the line A-A shown in the upper part of figure 2. The test rig comprises a gear system 201 and a power transmission shaft 204. The gear system comprises rotatable connection interfaces 202 and 203, e.g. flanges, suitable for being connected to input and output shafts of the gearbox 214 under test. The gear system 201 and the power transmission shaft 204 constitute together with the gearbox 214 a mechanical closed power loop. The test rig comprises also a drive motor 205 arranged to drive the mechanical closed power loop. The gear system 201 comprises a differential gear stage 206 shown in the section A-A where gear teeth are depicted with dashed lines. The differential gear stage 206 is similar to the differential gear stage 106 shown in figure 1. The test rig further comprises an electrical machine 210 that is connected to the planet-wheel carrier of the differential gear stage 206. The electrical machine 210 is supplied and controlled with an electrical converter device 211.

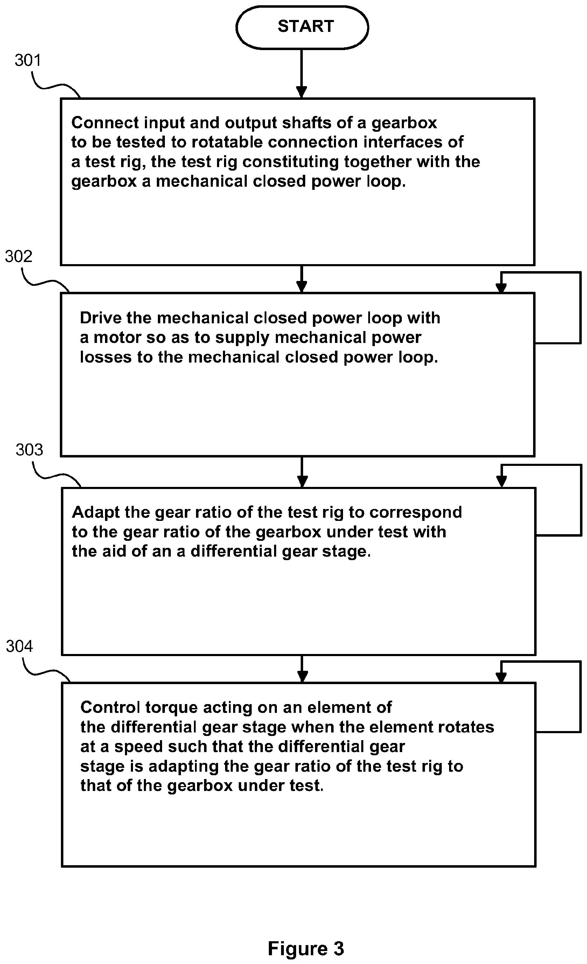

Figure 3 shows a flow chart of a method according to an embodiment of the invention for testing a gearbox. The method comprises:
- action 301: connecting input and output shafts of the gearbox under test to rotatable connection interfaces of a test rig, the test rig constituting together with the gearbox under test a mechanical closed power loop, and
- action 302: driving the mechanical closed power loop so as to supply mechanical power losses to the mechanical closed power loop,
- action 303: adapting the gear ratio of the test rig to correspond to the gear ratio of the gearbox under test with the aid of a differential gear stage having first and second rotatable elements which form part of the mechanical closed power loop and whose mutual rotational speed difference depends on rotational speed of a third rotatable element of the differential gear stage, and
- action 304: imposing test torque to the gearbox under test by controlling torque acting on the third rotatable element when the third rotatable element is rotating.

In the method according to the invention, the differential gear stage is a planetary gear. The sun gear shaft and the gear ring of the planetary gear are the first and second rotatable elements, respectively, and the planet-wheel carrier of the planetary gear is the third rotatable element.

In a method according to an embodiment of the invention, the torque acting on the third rotatable element is controlled with a system comprising an electrical machine and an electrical converter device that controls the electrical machine on the basis of a difference between the torque of the electrical machine and a reference torque. Preferably, the electrical machine is an alternating current electrical machine and the electrical converter device is a frequency converter.

In a method according to an embodiment of the invention, the reference torque is changed in response to a situation in which the rotational speed of the electrical machine meets an upper speed limit or a lower speed limit. The reference torque is changed in the direction that the rotational speed is returned to a speed window defined with the upper and lower speed limits.

In a method according to an embodiment of the invention, the mechanical closed power loop is driven with an electrical motor and rotational speed of the electrical motor is controlled on the basis of a difference between the rotational speed of the electrical motor and a reference speed. The electrical motor can be an alternating current electrical motor that is supplied and controlled with a frequency converter. The specific examples provided in the description given above should not be construed as limiting. Therefore, the invention is not limited merely to the embodiments described above. The invention is defined by the appended claims.

## Claims

1. A test rig for testing a gearbox (114), the test rig comprising:
- a gear system (101, 202) comprising rotatable connection interfaces (102, 103, 202, 203) suitable for being connected to input and output shafts of the gearbox under test,
- a power transmission shaft (104, 204) such that mechanical power is capable of flowing in a mechanical closed power loop constituted by the gear system, the gearbox under test, and the power transmission shaft when the gearbox under test is connected to the rotatable connection interfaces, and
- a drive motor (105, 205) for driving the mechanical closed power loop,
wherein the gear system comprises a differential gear stage (106, 206) having first and second rotatable elements (107, 108) which form part of the mechanical closed power loop and whose mutual rotational speed difference depends on rotational speed of a third rotatable element (109) of the differential gear stage, and wherein the test rig is adapted to the gear ratio of the gearbox (114) under test by allowing the third rotatable element (109) of the differential gear stage to rotate at such a speed that a speed difference of the first and second rotatable elements (107, 108) of the differential gear stage compensates for an effect of gear ratios of other elements, including the gearbox under test, in the mechanical closed power loop, and the test rig further comprises a controlling device (110, 111, 210, 211) connected to the third rotatable element of the differential gear stage and arranged to control torque acting on the third rotatable element when the third rotatable element is rotating, **characterized in that** the differential gear stage is a planetary gear, a sun gear shaft and a gear ring of the planetary gear being the first and second rotatable elements and a planet-wheel carrier of the planetary gear being the third rotatable element.

2. A test rig according to claim 1, wherein the controlling device comprises an electrical machine (110, 210) and an electrical converter device (111, 211) arranged to control the electrical machine on the basis of a difference between the torque of the electrical machine and a reference torque.

3. A test rig according to claim 2, wherein the electrical converter device is arranged to change the reference torque in response to a situation in which the rotational speed of the electrical machine meets an upper speed limit or a lower speed limit, the reference torque being changed in a direction that the rotational speed is returned to a speed window defined with the upper and lower speed limits.

4. A test rig according to any of claims 1-3, wherein the drive motor (105) is an electrical motor and the test rig comprises another electrical converter device (112) arranged to control rotational speed of the electrical motor on the basis of a difference between the rotational speed of the electrical motor and a reference speed.

5. A test rig according to any of claims 2-4, wherein the electrical machine is an alternating current electrical machine and the electrical converter device is a frequency converter.

6. A test rig according to any of claims 4-5, wherein the drive motor is an alternating current electrical motor and the other electrical converter device (112) is a frequency converter.

7. A method for testing a gearbox, the method comprising:
- connecting (301) input and output shafts of the gearbox under test to rotatable connection interfaces of a test rig, the test rig constituting together with the gearbox under test a mechanical closed power loop,
- driving (302) the mechanical closed power loop so as to supply mechanical power losses to the mechanical closed power loop,
- adapting (303) the gear ratio of the test rig to correspond to the gear ratio of the gearbox under test with the aid of a differential gear stage having first and second rotatable elements which form part of the mechanical closed power loop and whose mutual rotational speed difference depends on rotational speed of a third rotatable element of the differential gear stage, and
- imposing test torque to the gearbox under test by controlling (304) torque acting on the third rotatable element when the third rotatable element is rotating,
**characterized in that** the differential gear stage is a planetary gear, a sun gear shaft and a gear ring of the planetary gear being the first and second rotatable elements and a planet-wheel carrier of the planetary gear being the third rotatable element.

8. A method according to claim 7, wherein the torque acting on the third rotatable element is controlled with a system comprising an electrical machine and an electrical converter device that controls the electrical machine on the basis of a difference between the torque of the electrical machine and a reference torque.

9. A method according to claim 8, wherein the reference torque is changed in response to a situation in which the rotational speed of the electrical machine meets an upper speed limit or a lower speed limit, the reference torque being changed in a direction that the rotational speed is returned to a speed window defined with the upper and lower speed limits.

10. A method according to any of claims 7-9, wherein the mechanical closed power loop is driven with an electrical motor and rotational speed of the electrical motor is controlled on the basis of a difference between the rotational speed of the electrical motor and a reference speed.

11. A method according to any of claims 8-10, wherein the electrical machine is an alternating current electrical machine and the electrical machine is controlled with a frequency converter.

## Patentansprüche

1. Prüfstand zum Prüfen eines Getriebes (114), der Prüfstand umfassend:
- ein Getriebesystem (101, 202) mit drehbaren Verbindungsschnittstellen (102, 103, 202, 203), die geeignet sind, mit Eingangs- und Ausgangswellen des zu prüfenden Getriebes verbunden zu werden,
- eine Kraftübertragungswelle (104, 204), so dass mechanische Leistung in einem mechanischen geschlossenen Leistungskreislauf, der durch das Getriebesystem gebildet wird, fließen kann, wobei das zu prüfende Getriebe und die Kraftübertragungswelle, wenn das Getriebe getestet wird, mit den Verbindungsschnittstellen drehbar verbunden ist, und
- einen Antriebsmotor (105, 205) zum Antrieb des mechanischen geschlossenen Leistungskreislaufs,
wobei das Getriebesystem eine Differentialgetriebestufe (106, 206) mit einem ersten und einem zweiten drehbaren Element (107, 108) umfasst, die einen Teil des mechanischen geschlossenen Leistungskreislaufs bilden und deren gegenseitige Drehzahldifferenz von der Drehzahl eines dritten drehbaren Elements (109) der Differentialgetriebestufe abhängt, und wobei der Prüfstand an das Gangverhältnis des zu prüfenden Getriebes (114) angepasst ist, indem ermöglicht wird, dass sich das dritte drehbare Element (109) der Differentialgetriebestufe mit einer solchen Geschwindigkeit dreht, dass eine Geschwindigkeitsdifferenz des ersten und zweiten drehbaren Elements (107, 108) der Differentialgetriebestufe eine Wirkung von Gangverhältnissen anderer Elemente kompensiert, einschließlich des zu prüfenden Getriebes, in dem mechanischen geschlossenen Leistungskreislauf, und wobei der Prüfstand ferner eine Steuervorrichtung (110, 111, 210, 211) umfasst, die mit dem dritten drehbaren Element der Differentialgetriebestufe verbunden ist und so angeordnet ist, dass sie das Drehmoment steuert, das auf das dritte drehbare Element wirkt, wenn sich das dritte drehbare Element dreht, **dadurch gekennzeichnet, dass** die Differentialgetriebestufe ein Planetengetriebe ist, eine Getriebewelle und ein Zahnkranz des Planetengetriebes, die das erste und zweite drehbare Element sind, und ein Planetenradträger des Planetengetriebes, der das dritte drehbare Element ist.

2. Prüfstand nach Anspruch 1, wobei die Steuervorrichtung eine elektrische Maschine (110, 210) und eine elektrische Wandlervorrichtung (111, 211) umfasst, die angeordnet sind, um die elektrische Maschine aufgrund einer Differenz zwischen dem Drehmoment der elektrischen Maschine und einem Bezugsdrehmoment zu steuern.

3. Prüfstand nach Anspruch 2, wobei die elektrische Wandlervorrichtung angeordnet ist, um das Bezugsdrehmoment in Reaktion auf eine Situation zu ändern, in der die Drehzahl der elektrischen Maschine eine obere Drehzahlgrenze oder eine untere Drehzahlgrenze erreicht, wobei das Bezugsdrehmoment in einer Richtung geändert wird, in der die Drehzahl zu einem Drehzahlfenster zurückgeführt wird, das mit der oberen und unteren Drehzahlgrenze definiert ist.

4. Prüfstand nach einem der Ansprüche 1-3, wobei der Antriebsmotor (105) ein Elektromotor ist und der Prüfstand eine weitere elektrische Wandlervorrichtung (112) umfasst, die dazu eingerichtet ist, die Drehzahl des Elektromotors aufgrund einer Differenz zwischen der Drehzahl des Elektromotors und einer Bezugsdrehzahl zu steuern.

5. Prüfstand nach einem der Ansprüche 2-4, wobei die elektrische Maschine eine elektrische Wechselstrommaschine ist und die elektrische Wandlervorrichtung ein Frequenzwandler ist.

6. Prüfstand nach einem der Ansprüche 4-5, wobei der Antriebsmotor eine elektrische Wechselstrommaschine ist und die elektrische Wandlervorrichtung (112) ein Frequenzwandler ist.

7. Verfahren zum Prüfen eines Getriebes, das Verfahren umfassend:
- Verbinden (301) der Eingangs- und Ausgangswellen des zu prüfenden Getriebes mit drehbaren Verbindungsschnittstellen eines Prüfstands, wobei der Prüfstand zusammen mit dem zu prüfenden Getriebe einen mechanischen geschlossenen Leistungskreislauf bildet,
- Antreiben (302) des mechanischen geschlossenen Leistungskreislaufs, um dem mechanischen geschlossenen Leistungskreislauf mechanische Leistungsverluste zuzuführen,
- Anpassen (303) des Gangverhältnisses des Prüfstands an das Gangverhältnis des zu prüfenden Getriebes mithilfe einer Differentialgetriebestufe mit ersten und zweiten drehbaren Elementen, die Teil des mechanischen geschlossenen Leistungskreislaufs sind und deren gegenseitige Drehzahldifferenz von einem dritten drehbaren Element der Differentialgetriebestufe abhängt, und
- Aufbringen eines Prüfdrehmoments auf das zu prüfende Getriebe durch Steuern (304) des Drehmoments, das auf das dritte drehbare Element wirkt, wenn sich das dritte drehbare Element dreht,
**dadurch gekennzeichnet, dass** die Differentialgetriebestufe ein Planetengetriebe ist, eine Getriebewelle und ein Zahnkranz des Planetengetriebes, die das erste und zweite drehbare Element sind, und ein Planetenradträger des Planetengetriebes, der das dritte drehbare Element ist.

8. Verfahren nach Anspruch 7, wobei das auf das dritte drehbare Element wirkende Drehmoment mit einem System gesteuert wird, das eine elektrische Maschine und eine elektrische Wandlervorrichtung umfasst, die die elektrische Maschine aufgrund einer Differenz zwischen dem Drehmoment der elektrischen Maschine und einem Bezugsdrehmoment steuert.

9. Verfahren nach Anspruch 8, wobei das Bezugsdrehmoment in Reaktion auf eine Situation geändert wird, in der die Drehzahl der elektrischen Maschine eine obere Drehzahlgrenze oder eine untere Drehzahlgrenze erreicht, wobei das Bezugsdrehmoment in einer Richtung geändert wird, in der die Drehzahl zu einem Drehzahlfenster zurückgeführt wird, das mit der oberen und unteren Drehzahlgrenze definiert ist.

10. Verfahren nach einem der Ansprüche 7-9, wobei der mechanische geschlossene Leistungskreislauf mit einem Elektromotor angetrieben wird und die Drehzahl des Elektromotors aufgrund einer Differenz zwischen der Drehzahl des Elektromotors und einer Bezugsdrehzahl gesteuert wird.

11. Verfahren nach einem der Ansprüche 8-10, wobei die elektrische Maschine eine elektrische Wechselstrommaschine ist und die elektrische Maschine mit einem Frequenzumrichter gesteuert wird.

## Revendications

1. Banc d'essai pour tester une boite de vitesses (114), le banc d'essai comprenant :
- un système d'engrenages (101, 202) comprenant des interfaces de liaison rotatives (102, 103, 202, 203) adaptées pour être reliées à des arbres d'entrée et de sortie de la boite de vitesses en cours d'essai,
- un arbre de transmission de puissance (104, 204) de telle sorte que de la puissance mécanique soit capable de circuler dans une boucle de puissance mécanique fermée constituée par le système d'engrenages, la boite de vitesses en cours d'essai et l'arbre de transmission de puissance lorsque la boite de vitesses en cours d'essai est reliée aux interfaces de liaison rotatives, et
- un moteur d'entraînement (105, 205) pour entraîner la boucle de puissance mécanique fermée,
dans lequel le système d'engrenages comprenant un étage d'engrenage différentiel (106, 206) ayant des premier et deuxième éléments rotatifs (107, 108) qui font partie de la boucle de puissance mécanique fermée et dont la différence de vitesses de rotation mutuelles dépend de la vitesse de rotation d'un troisième élément rotatif (109) de l'étage d'engrenage différentiel, et dans lequel le banc d'essai est adapté au rapport de vitesses de la boite de vitesses (114) en cours d'essai en permettant au troisième élément rotatif (109) de l'étage d'engrenage différentiel de tourner à une vitesse telle qu'une différence de vitesse des premier et deuxième éléments rotatifs (107, 108) de l'étage d'engrenage différentiel compense un effet de rapport de vitesses d'autres éléments, y compris la boite de vitesses en cours d'essai, dans la boucle de puissance mécanique fermée, et le banc d'essai comprend en outre un dispositif de commande (110, 111 ,210, 211) relié au troisième élément rotatif de l'étage d'engrenage différentiel et agencé pour commander le couple agissant sur le troisième élément rotatif lorsque le troisième élément rotatif tourne, **caractérisé en ce que** l'étage d'engrenage différentiel est un engrenage planétaire, un arbre d'engrenage solaire et une couronne dentée de l'engrenage planétaire étant les premier et deuxième éléments et un porte-satellites de l'engrenage planétaire étant le troisième élément rotatif.

2. Banc d'essai selon la revendication 1, dans lequel le dispositif de commande comprend une machine électrique (110, 210) et un dispositif de convertisseur électrique (111, 211) agencé pour commander la machine électrique en se basant sur une différence entre le couple de la machine électrique et un couple de référence.

3. Banc d'essai selon la revendication 2, dans lequel le dispositif de convertisseur électrique est agencé pour modifier le couple de référence en réponse à une situation dans laquelle la vitesse de rotation de la machine électrique rencontre une limite de vitesse supérieure ou une limite de vitesse inférieure, le couple de référence étant modifié dans une direction où la vitesse de rotation est renvoyée vers une fenêtre de vitesse définie avec les limites de vitesse supérieure et inférieure.

4. Banc d'essai selon l'une quelconque des revendications 1 - 3, dans lequel le moteur d'entraînement (105) est un moteur électrique et le banc d'essai comprend un autre dispositif de convertisseur électrique (112) agencé pour commander la vitesse de rotation du moteur électrique en se basant sur une différence entre la vitesse de rotation du moteur électrique et une vitesse de référence.

5. Banc d'essai selon l'une quelconque des revendications 2 - 4, dans lequel la machine électrique est une machine électrique à courant alternatif et le dispositif de convertisseur électrique est un convertisseur de fréquences.

6. Banc d'essai selon l'une quelconque des revendications 4 - 5, dans lequel le moteur d'entraînement est un moteur électrique à courant alternatif et l'autre dispositif de convertisseur électrique (112) est un convertisseur de fréquences.

7. Procédé pour tester une boite de vitesses, le procédé comprenant :
- de relier (301) les arbres d'entrée et de sortie de la boite de vitesses en cours d'essai à des interfaces de connexion rotatives d'un banc d'essai, le banc d'essai constituant conjointement avec la boite de vitesses en cours d'essai, une boucle de puissance mécanique fermée,
- d'entraîner (302) la boucle de puissance mécanique fermée de façon à fournir des pertes de puissance mécanique à la boucle de puissance mécanique fermée,
- d'adapter (303) le rapport de vitesses du banc d'essai pour correspondre au rapport de vitesses de la boite de vitesses en cours d'essai à l'aide d'un étage d'engrenage différentiel ayant des premier et deuxième éléments rotatifs qui font partie de la boucle de puissance mécanique fermée et dont la différence de vitesses de rotation mutuelles dépend de la vitesse de rotation d'un troisième élément rotatif de l'étage d'engrenage différentiel, et
- d'imposer un couple d'essai à la boite de vitesses en cours d'essai en commandant (304) le couple agissant sur le troisième élément rotatif lorsque le troisième élément rotatif tourne,
**caractérisé en ce que** l'étage d'engrenage différentiel est un engrenage planétaire, un arbre d'engrenage solaire et une couronne dentée de l'engrenage planétaire étant les premier et deuxième éléments et un porte-satellites de l'engrenage planétaire étant le troisième élément rotatif.

8. Procédé selon la revendication 7, dans lequel le couple agissant sur le troisième élément rotatif est commandé avec un système comprenant une machine électrique et un dispositif de convertisseur électrique qui commande la machine électrique en se basant sur une différence entre le couple de la machine électrique et un couple de référence.

9. Procédé selon la revendication 8, dans lequel le couple de référence est modifié en réponse à une situation dans laquelle la vitesse de rotation de la machine électrique rencontre une limite de vitesse supérieure ou une limite de vitesse inférieure, le couple de référence étant modifié dans une direction où la vitesse de rotation est renvoyée vers une fenêtre de vitesse définie avec les limites de vitesse supérieure et inférieure.

10. Procédé selon l'une des revendications 7 - 9, dans lequel la boucle de puissance mécanique fermée est entraînée avec un moteur électrique et la vitesse de rotation du moteur électrique est commandée en se basant sur une différence entre la vitesse de rotation du moteur électrique et une vitesse de référence.

11. Procédé selon l'une des revendications 8 - 10, dans lequel la machine électrique est une machine électrique à courant alternatif et la machine électrique est commandée avec un convertisseur de fréquences.
